# EUROPEAN PATENT APPLICATION

(11) **EP 4 528 996 A1**
(43) Date of publication of application: **26.03.2025**
(21) Application number: 24821235.9
(22) Date of filing: 28.05.2024
(51) Int. Cl.: H02K 9/193, H02K 9/19, H02K 5/20

(54) **ANTI-SEEPAGE MOTOR, POWER ASSEMBLY AND ELECTRIC VEHICLE**

(30) Priority: 30.06.2023 CN 202321727398 U
(71) Applicant: Huawei Digital Power Technologies Co., Ltd., Shenzhen, Guangdong 518043 (CN)
(72) Inventor: YANG, Luyi, Shenzhen, Guangdong 518043 (CN); MA, Shuai, Shenzhen, Guangdong 518043 (CN); LI, Chuanyang, Shenzhen, Guangdong 518043 (CN); XIA, Gongchuan, Shenzhen, Guangdong 518043 (CN)
(74) Representative: Gill Jennings & Every LLP
(86) International application number: PCT/CN2024/095844
(87) International publication number: WO 2025/001705

(57) **Abstract**

This application provides a motor for oil anti-leakage, a powertrain, and an electric vehicle. The motor includes a motor housing and a motor stator. The motor housing includes a motor accommodating cavity. The motor accommodating cavity penetrates the motor housing along an axial direction of the motor. The motor accommodating cavity is configured to fasten the motor stator. The motor accommodating cavity includes a stator cavity and an end cavity. The stator cavity and the end cavity are arranged adjacent to each other. Along the axial direction of the motor, a length of the stator cavity is greater than or equal to a length of the motor stator, so that the stator cavity can be configured to accommodate the motor stator along the axial direction of the motor. Along a radial direction of the motor, an inner diameter of the end cavity is greater than an inner diameter of the stator cavity. An inner wall of the end cavity is a rough surface, and an inner wall of the stator cavity is a machining surface. In this application, the inner diameter of the end cavity along the radial direction of the motor is set to be greater than the inner diameter of the stator cavity along the radial direction of the motor, so that the inner wall of the end cavity is not worn during machining of the inner wall of the stator cavity. This prevents an air hole on the inner wall of the end cavity from reducing sealing performance.

## Description

This application claims priority to Chinese Patent Application No. 202321727398.X, filed with the China National Intellectual Property Administration on June 30, 2023 and entitled "MOTOR FOR OIL ANTI-LEAKAGE, POWERTRAIN, AND ELECTRIC VEHICLE", which is incorporated herein by reference in its entirety.

### TECHNICAL FIELD

This application relates to the field of motor technologies, and in particular, to a motor for oil anti-leakage, a powertrain, and an electric vehicle.

### BACKGROUND

An integrated powertrain is usually used in an existing electric vehicle as a power source. Currently, a motor and a motor control unit are usually integrated into a two-in-one powertrain, or a motor, a motor control unit, and a reducer are usually integrated into a three-in-one powertrain, or a motor, a motor control unit, a reducer, and another component of the electric vehicle are usually integrated into an all-in-one powertrain. The motor is configured to convert electric energy into mechanical energy. In the powertrain of the electric vehicle, the motor is an important component for power supply. The motor usually includes a motor stator and a motor housing. The motor housing is configured to accommodate and fasten the motor stator, and the motor stator is configured to generate a magnetic field. Currently, when the motor is assembled, an inner surface of the motor housing needs to be processed, so that the motor stator is attached to the inner surface of the motor housing. However, sealing performance of the processed motor housing deteriorates, and sealing performance of the motor is affected.

### SUMMARY

This application provides a motor for oil anti-leakage, a powertrain, and an electric vehicle.

According to a first aspect, an embodiment of this application provides a motor for oil anti-leakage, where the motor includes a motor housing and a motor stator, the motor housing includes a motor accommodating cavity, the motor accommodating cavity penetrates the motor housing along an axial direction of the motor, the motor accommodating cavity is configured to fasten the motor stator, the motor accommodating cavity includes a stator cavity and an end cavity, and the stator cavity and the end cavity are arranged adjacent to each other. Along the axial direction of the motor, a length of the stator cavity is greater than or equal to a length of the motor stator. Along a radial direction of the motor, an inner diameter of the end cavity is greater than an inner diameter of the stator cavity. An inner wall of the end cavity is a rough surface, and an inner wall of the stator cavity is a machining surface.

In this embodiment of this application, the motor is disposed, and the length of the stator cavity is greater than or equal to the length of the motor stator along the axial direction of the motor, so that the stator cavity can fully accommodate the motor stator along the axial direction of the motor. In addition, the inner diameter of the end cavity is greater than the inner diameter of the stator cavity along the radial direction of the motor. This prevents the end cavity from obstructing assembling of the motor stator. In addition, the end cavity can be further configured to guide an electric stator to be assembled to the stator cavity. This improves assembling efficiency. The inner diameter of the end cavity is greater than the inner diameter of the stator cavity, so that the inner wall of the end cavity is not worn during machining of the inner wall of the stator cavity. This prevents an air hole on the inner wall of the end cavity from reducing sealing performance, and prevents oil leakage.

In this embodiment of this application, a surface roughness of the rough surface is greater than a surface roughness of the machining surface. In this embodiment of this application, a surface roughness of the inner wall of the stator cavity is small, and the inner wall of the stator cavity is smoother than the inner wall of the end cavity. This helps improve assembling precision between the motor stator and the stator cavity, and ensures structural reliability of the motor stator and the motor housing. A surface roughness of the inner wall of the end cavity is large, and processing costs can be reduced. The inner diameter of the end cavity is greater than the inner diameter of the stator cavity along the radial direction of the motor, and the surface roughness of the inner wall of the end cavity does not cause negative impact on mounting of the motor stator.

In this embodiment of this application, density of the rough surface is greater than density of the machining surface. The density of the rough surface is higher than that of the machining surface, and the rough surface has higher sealing performance. In this embodiment of this application, the rough surface is a surface formed through die casting. In an embodiment, an inner wall of the machining surface has a cutting mark, and an inner wall of the rough surface has no cutting mark. In an embodiment, the motor housing is formed through die casting. The inner wall of the end cavity is the rough surface with high density. The inner wall of the end cavity has no air hole or has only a few air holes, and the inner wall of the end cavity has higher sealing performance.

When die casting is performed on the motor housing, air holes are easily generated in the motor housing, and a plurality of air holes communicate with each other and form an air hole path. When the plurality of air holes communicate with each other along the radial direction of the motor, cooling oil in the motor accommodating cavity leaks. After the inner wall of the stator cavity is cut, some air holes may be exposed. However, the inner wall of the stator cavity is configured to precisely cooperate with the motor stator. For example, the motor stator is in an interference fit with the inner wall of the stator cavity, so that there are few gaps or no gap between the motor stator and the inner wall of the stator cavity, and the inner wall of the stator cavity are machined. Even if a part of the air hole is exposed, sealing performance inside the motor accommodating cavity is not affected. However, the inner wall of the end cavity does not closely cooperate with another mechanical part. If a large quantity of air holes are on the inner wall of the end cavity, the cooling oil may leak from a hole path for air holes communicating with each other. In this solution, the surface roughness of the inner wall of the end cavity is set to be greater than the surface roughness of the inner wall of the stator cavity, or a cutting degree of the inner wall of the end cavity is set to be less than a cutting degree of the inner wall of the stator cavity, so that there are fewer air holes on the inner wall of the end cavity, blocking circulation of cooling oil in the air holes, and reducing a risk of cooling oil leakage.

In an embodiment, one end of the end cavity and the other end of the end cavity are arranged along the axial direction of the motor, a diameter of the one end of the end cavity is greater than a diameter of the other end of the end cavity, and the other end of the end cavity is adjacent to the stator cavity. In this embodiment of this application, the one end of the end cavity, the other end of the end cavity, and the stator cavity are sequentially arranged along the axial direction of the motor. Along the axial direction of the motor, the diameter of the one end of the end cavity is greater than the diameter of the other end of the end cavity, so that in a process of assembling the motor stator, the one end of the end cavity and the other end of the end cavity can guide the motor stator.

In an embodiment, the inner wall of the end cavity includes a draft angle section and a transition fillet section, where the draft angle section, the transition fillet section, and the stator cavity are sequentially arranged adjacent to each other along the axial direction of the motor. One end of the draft angle section and the other end of the draft angle section are arranged opposite to each other along the axial direction of the motor, the other end of the draft angle section is adjacent to the transition fillet section, and a diameter of the draft angle section gradually decreases from the one end of the draft angle section to the other end of the draft angle section. An inner wall of the transition fillet section is arc-shaped.

In this embodiment of this application, to reduce a surface roughness of the inner wall of the stator cavity, the inner wall of the stator cavity needs to be processed by using a mold. In this solution, the diameter of the draft angle section gradually decreases from the one end of the draft angle section to the other end of the draft angle section, which is equivalent to that there is an included angle between an extension direction of the draft angle section and the axial direction of the motor, so that the mold used for processing can be smoothly detached from the motor accommodating cavity. This prevents an inner wall of the motor accommodating cavity from being worn. The transition fillet section is disposed between the draft angle section and the inner wall of the stator cavity. This helps reduce stress concentration and strengthen structural strength of the motor housing.

In an embodiment, along the axial direction of the motor, a length of the end cavity is less than the length of the stator cavity, and the length of the end cavity is less than the length of the motor stator; and a projection of the motor stator along the radial direction of the motor is located in a projection of the stator cavity along the radial direction of the motor. In this embodiment of this application, a volume and manufacturing costs of the motor housing are reduced without affecting assembling and fastening of the motor stator. In this case, a projection of the stator cavity along the axial direction of the motor can fully cover a projection of the motor stator along the axial direction of the motor, so that the stator cavity accommodates the motor stator along the axial direction of the motor.

In an embodiment, the motor housing further includes a bolt hole, and the bolt hole is configured to fasten the motor housing and a motor end cover. Along the radial direction of the motor, a projection of the bolt hole is located in a projection of the end cavity. In this embodiment of this application, the motor end cover is close to the adjacent end cavity along the axial direction of the motor, and the motor housing and the motor end cover are fastened through the bolt hole. This helps enhance structural strength of the motor. The surface roughness of the inner wall of the end cavity is large and density is high. In this way, this prevents cooling oil in the motor from flowing into the bolt hole through the inner wall of the end cavity. Generally, the bolt hole is formed in the motor housing through machining, and an air hole is exposed on an inner wall of the bolt hole. If an inner wall of the end cavity opposite to the bolt hole also has an air hole, the bolt hole may communicate with the air hole on the inner wall of the end cavity. This increases a risk of cooling oil leakage. In this application, the bolt hole is opposite to the end cavity having the rough surface, and the projection of the bolt hole along the radial direction of the motor is located in the projection of the end cavity. This improves sealing performance and reduces the risk of cooling oil leakage.

In an embodiment, along the radial direction of the motor, a distance between the inner wall of the end cavity and the bolt hole is greater than a distance between the inner wall of the stator cavity and an outer surface of the motor housing. In this embodiment of this application, the distance between the inner wall of the end cavity and the bolt hole is large along the radial direction of the motor, and the bolt hole and the inner wall of the stator cavity do not overlap along the radial direction of the motor, so that a distance between the bolt hole and the inner wall of the stator cavity is long. In this way, even if there are air holes in both the bolt hole and the inner wall of the stator cavity due to machining, because a transmission path that is of the cooling oil and that is between the inner wall of the stator cavity and the bolt hole is long, and the cooling oil is difficult to enter the bolt hole. This effectively avoids cooling oil leakage.

In an embodiment, a surface roughness of the inner wall of the end cavity is greater than a surface roughness of a hole wall of the bolt hole. In an embodiment, the hole wall of the bolt hole is a machining surface. In this embodiment of this application, to effectively fasten the motor housing and the motor end cover, a small surface roughness of the hole wall of the bolt hole needs to be disposed, that is, the bolt hole needs to be processed. Similar to the inner wall of the stator cavity, the inner wall of the bolt hole also has an air hole exposed. If the cooling oil flows into the bolt hole through the air hole, because a hole diameter of the bolt hole is far greater than a hole diameter of the air hole, not only a leakage amount of the cooling oil is increased, but also a connection relationship between the motor end cover and the motor housing is affected. This causes a loose connection relationship. In this solution, the surface roughness of the inner wall of the end cavity is set to be greater than the surface roughness of the hole wall of the bolt hole. Because the inner wall of the end cavity does not expose the air hole, this effectively avoids cooling oil leakage and loose connection relationship.

In an embodiment, the motor further includes the motor end cover, the motor end cover includes a housing limiting slot, the motor housing includes a housing limiting protrusion, and the housing limiting slot is configured to accommodate the housing limiting protrusion. Along the axial direction of the motor, the housing limiting slot is recessed from the motor end cover away from the motor stator, and the housing limiting protrusion protrudes from the motor housing toward the motor end cover. Along the radial direction of the motor, the housing limiting protrusion and the bolt hole are spaced from each other. Along a circumferential direction of the motor, the housing limiting slot and the housing limiting protrusion each surround a motor axis. In this embodiment of this application, the motor end cover and the motor housing are positioned through the housing limiting slot and the housing limiting protrusion.

In an embodiment, the housing limiting slot includes an inner slot wall and an outer slot wall, the housing limiting protrusion includes an inner wall of the protrusion and an outer wall of the protrusion, and the inner slot wall, the inner wall of the protrusion, the outer wall of the protrusion, and the outer slot wall are arranged along the radial direction of the motor. The inner wall of the protrusion and the inner slot wall are spaced from each other along the radial direction of the motor, and the outer wall of the protrusion is attached to the outer slot wall.

In this embodiment of this application, the motor end cover and the motor housing are jointly configured to protect internal components such as the motor stator. In a process of assembling the motor housing and the motor end cover, the bolt hole is mainly used for fastening, and the housing limiting protrusion and the housing limiting slot are used for positioning and auxiliary fastening. The inner wall of the protrusion and the inner slot wall are spaced from each other along the radial direction of the motor, to provide an assembling gap between the motor housing and the motor end cover, so that the housing limiting protrusion can be smoothly mounted in the housing limiting slot, and the outer wall of the protrusion is attached to the outer slot wall along the radial direction of the motor, to implement radial positioning of the motor housing and the motor end cover. In an embodiment, the outer wall of the protrusion is in interference fit with the outer slot wall along the radial direction of the motor.

In an embodiment, a surface roughness of the inner wall of the protrusion is greater than a surface roughness of the outer wall of the protrusion, and a surface roughness of the inner slot wall is greater than a surface roughness of the outer slot wall. Along the axial direction of the motor, the inner wall of the stator cavity, the inner wall of the end cavity, and the inner wall of the protrusion are sequentially arranged adjacent to each other. Along the radial direction of the motor, a distance between the inner wall of the protrusion and the outer wall of the protrusion is less than the distance between the inner wall of the end cavity and the bolt hole.

In this embodiment of this application, the inner wall of the end cavity and the inner wall of the protrusion are arranged adjacent to each other along the axial direction of the motor. The surface roughness of the inner wall of the protrusion is set to be greater than the surface roughness of the outer wall of the protrusion. This reduces processing difficulty and costs of the inner wall of the protrusion and the inner wall of the end cavity, and can prevent the cooling oil from leaking through the inner wall of the protrusion. The surface roughness of the outer wall of the protrusion is smaller than the surface roughness of the inner wall of the protrusion, and the surface roughness of the outer slot wall is smaller than the surface roughness of the inner slot wall. Surfaces of the outer wall of the protrusion and the outer slot wall are smooth after processing, so that the outer wall of the protrusion is more closely attached to the outer slot wall. This strengthens a connection relationship between the motor end cover and the motor housing, and improves the structure strength. In addition, the outer wall of the protrusion and the outer slot wall are closely attached to each other. This further helps enhance sealing effect, and avoids a risk of cooling oil leakage.

In an embodiment, the motor further includes a guiding ring, a motor winding, and an axial limiting protrusion of the guiding ring, the axial limiting protrusion of the guiding ring is fastened to the motor end cover, the guiding ring is fastened between the axial limiting protrusion of the guiding ring and the motor stator along the axial direction of the motor, the guiding ring includes a guiding hole, and the end cavity is configured to accommodate a part of the guiding ring and a part of the motor winding. The axial limiting protrusion of the guiding ring and the housing limiting slot are arranged adjacent to each other along the radial direction of the motor. Along the radial direction of the motor, the guiding hole penetrates the guiding ring, and the motor winding, the guiding ring, and the inner wall of the end cavity are spaced from each other. Along the radial direction of the motor, a projection of the motor winding partially overlaps a projection of the guiding ring along the radial direction of the motor, the projection of the motor winding partially overlaps a projection of the guiding hole along the radial direction of the motor, a projection of the guiding ring partially overlaps a projection of the end cavity, and the projection of the guiding ring partially overlaps a projection of the stator cavity.

In an embodiment, the housing limiting protrusion and the motor housing are an integrated structure, so that overall structural strength of the motor housing is higher. In an embodiment, both the inner wall of the protrusion in the housing limiting protrusion and the inner wall of the end cavity are rough surface inner walls, both the inner wall of the protrusion in the housing limiting protrusion and the inner wall of the end cavity have a draft angle during extrusion, and an inner diameter of the housing limiting protrusion is greater than a diameter of the end cavity.

In an embodiment, the motor further includes a radial limiting portion of the guiding ring. Along the axial direction of the motor, the radial limiting portion of the guiding ring, the axial limiting protrusion of the guiding ring, and the motor end cover are sequentially arranged adjacent to each other and fastened relative to each other, and a projection area of the radial limiting portion of the guiding ring along the axial direction of the motor is less than a projection area of the axial limiting protrusion of the guiding ring along the axial direction of the motor. Along the radial direction of the motor, the guiding ring, the radial limiting portion of the guiding ring, and the inner wall of the end cavity are sequentially arranged, the guiding ring is adjacent to the radial limiting portion of the guiding ring, the radial limiting portion of the guiding ring and the inner wall of the end cavity are spaced from each other, and the projection of the guiding ring partially overlaps a projection of the radial limiting portion of the guiding ring along the radial direction of the motor.

In this embodiment of this application, along the radial direction of the motor, the radial limiting portion of the guiding ring and the guiding ring are disposed adjacent to each other, and the projection of the guiding ring partially overlaps the projection of the radial limiting portion of the guiding ring along the radial direction of the motor, so that the radial limiting portion of the guiding ring can limit movement of the guiding ring along the radial direction of the motor. Along the radial direction of the motor, the radial limiting portion of the guiding ring is located between the guiding ring and the inner wall of the end cavity, and the radial limiting portion of the guiding ring and the inner wall of the end cavity are spaced from each other, so that the housing limiting protrusion can smoothly enter the housing limiting slot through a gap between the radial limiting portion of the guiding ring and the inner wall of the end cavity. Along the axial direction of the motor, the projection area of the radial limiting portion of the guiding ring is less than the axial limiting protrusion of the guiding ring, so that the radial limiting portion of the guiding ring does not block a connection between the axial limiting protrusion of the guiding ring and the guiding ring.

In this embodiment of this application, the axial limiting protrusion of the guiding ring is configured to implement axial limiting of the guiding ring, the radial limiting portion of the guiding ring is configured to implement radial limiting of the guiding ring, and the axial limiting protrusion of the guiding ring cooperates with the radial limiting portion of the guiding ring, so that the guiding ring is not likely to be displaced relative to the motor end cover and the motor stator. This helps enhance structural stability of the guiding ring.

According to a second aspect, an embodiment of this application provides a powertrain, where the powertrain includes a motor control unit, a three-phase input copper bar, and the motor according to the first aspect or any one of the foregoing embodiments of the first aspect, the motor control unit is electrically connected to a motor winding of the motor through the three-phase input copper bar, and the three-phase input copper bar includes three input copper bars, and the three input copper bars are sequentially spaced from each other along a circumferential direction of the motor. According to the motor provided in this application, an inner diameter of an end cavity is greater than an inner diameter of a stator cavity, so that assembling efficiency of the motor is improved, and an inner wall of the end cavity is not worn during machining of an inner wall of the stator cavity. This prevents an air hole on the inner wall of the end cavity from reducing sealing performance, improves sealing performance of the motor, and further improves assembling efficiency, sealing performance, and overall performance of the powertrain.

In an embodiment, the powertrain includes an integrated housing, the integrated housing includes a motor housing, a reducer accommodating cavity, and a motor accommodating cavity, the motor housing is an integrated structure, the motor housing is enclosed to form the motor accommodating cavity, the motor accommodating cavity is configured to accommodate a motor stator, the reducer accommodating cavity is configured to accommodate a reducer, the motor accommodating cavity penetrates the integrated housing along a first direction and communicates with the reducer accommodating cavity, a motor shaft of the motor is configured to drive the reducer, the first direction is parallel to an axial direction of the motor, and the motor and the reducer are arranged along the first direction.

In an embodiment, the integrated housing further includes a controller accommodating cavity, a direct current input interface mounting hole, and an alternating current output interface mounting hole, the controller accommodating cavity is configured to accommodate the motor control unit, the controller accommodating cavity and the motor accommodating cavity are arranged along a second direction, the second direction is perpendicular to the first direction, a motor end cover includes an alternating current output interface communication hole, a winding wiring hole, and a cooling hole, and the three input copper bars penetrate the winding wiring hole and are electrically connected to the motor winding. Along the first direction, the direct current input interface mounting hole and the alternating current output interface mounting hole each penetrate the integrated housing and communicate with the controller accommodating cavity, the alternating current output interface communication hole, the winding wiring hole, and the cooling hole all penetrate the motor end cover, the direct current input interface mounting hole and the alternating current output interface mounting hole are arranged opposite to each other, a projection of the alternating current output interface communication hole covers a projection of the alternating current output interface mounting hole, a projection of the three-phase input copper bar partially overlaps the projection of the alternating current output communication hole, and projections of the three input copper bars partially overlap a projection of the cooling hole. Along a radial direction of the motor, the winding wiring hole is arranged between the alternating current output interface communication hole and the motor shaft, and the cooling hole is arranged between the alternating current output interface communication hole and the winding wiring hole. Along the first direction, the cooling hole and a housing limiting slot of the motor are arranged adjacent to each other, and the cooling hole communicates with the housing limiting slot.

According to a third aspect, an embodiment of this application provides an electric vehicle, including a vehicle body, a wheel, and the motor according to the first aspect or any one of the foregoing embodiments of the first aspect or the powertrain according to the second aspect or any one of the foregoing embodiments of the second aspect, where the motor or the powertrain is configured to drive the wheel, and the vehicle body is configured to fasten the motor or the powertrain. The powertrain in this application meets design requirements such as miniaturization, power density, reliability, heat dissipation performance, and power performance, to improve overall performance of the electric vehicle.

### BRIEF DESCRIPTION OF DRAWINGS

To describe technical solutions in embodiments of this application more clearly, the following describes accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a diagram of a structure of a motor according to an embodiment of this application;
FIG. 4 is a sectional view of the motor shown in FIG. 3 along AA;
FIG. 5 is a partial enlarged view of an M1 part in the motor shown in FIG. 4;
FIG. 6 is a diagram of a structure of a motor end cover according to an embodiment of this application;
FIG. 7 is a partial exploded view of a powertrain according to an embodiment of this application;
FIG. 8 is a diagram of a partial structure of a powertrain according to an embodiment of this application; and
FIG. 9 is a diagram of a partial structure of a powertrain according to an embodiment of this application.

### DESCRIPTION OF EMBODIMENTS

The following describes technical solutions in embodiments of this application with reference to accompanying drawings in embodiments of this application. It is clear that the described embodiments are only a part rather than all of embodiments of this application.

Terms such as "first" and "second" in this specification are only intended for a purpose of description, and shall not be understood as an indication or implication of relative importance or implicit indication of a quantity of indicated technical features. Therefore, a feature limited by "first" or "second" may explicitly or implicitly include one or more features. In descriptions of this application, unless otherwise stated, "a plurality of" means two or more than two.

In addition, in this specification, position terms such as "top" and "bottom" are defined relative to positions of structures in the accompanying drawings. It should be understood that these position terms are relative concepts used for relative description and clarification, and may correspondingly change according to changes in the positions of the structures.

For ease of understanding, the following first explains and describes English abbreviations and related technical terms in embodiments of this application.

Surface roughness: refers to unevenness of a surface with a small spacing and a small peak and valley.

Parallelism: Parallelism defined in embodiments of this application is not limited to absolute parallelism. The definition of the parallelism may be understood as basic parallelism. A case in which there is no absolute parallelism due to assembling tolerance, design tolerance, impact of structural flatness, or another factor is allowed.

Verticality: Verticality defined in embodiments of this application is not limited to an absolute vertical intersection (where an included angle is 90 degrees) relationship. A case in which there is no absolute perpendicular intersection due to assembling tolerance, design tolerance, impact of structural flatness, or another factor is allowed. An error within a small angle range is allowed. For example, an assembling error range of 80 degrees to 100 degrees may be understood as a vertical relationship.

First direction Y: is parallel to an axial direction of a motor, where the axial direction of the motor is an axial direction of a motor shaft.

Second direction Z: is perpendicular to the first direction Y and a third direction X.

Third direction X: is perpendicular to the first direction Y and the second direction Z.

Currently, when the motor is assembled, an inner surface of a motor housing needs to be processed, so that a motor stator is attached to the inner surface of the motor housing. However, sealing performance of the processed motor housing deteriorates, and sealing performance of the motor is affected.

Embodiments of this application provide a motor for oil anti-leakage. The motor includes a motor housing and a motor stator. The motor housing includes a motor accommodating cavity. The motor accommodating cavity penetrates the motor housing along an axial direction of the motor. The motor accommodating cavity is configured to fasten the motor stator. The motor accommodating cavity includes a stator cavity and an end cavity. The stator cavity and the end cavity are arranged adjacent to each other. Along the axial direction of the motor, a length of the stator cavity is greater than or equal to a length of the motor stator, so that the stator cavity can be configured to accommodate the motor stator along the axial direction of the motor. Along a radial direction of the motor, an inner diameter of the end cavity is greater than an inner diameter of the stator cavity. When the motor stator is assembled into the motor housing, the motor stator reaches the stator cavity through the end cavity. In embodiments of this application, the inner diameter of the end cavity along the radial direction of the motor is set to be greater than the inner diameter of the stator cavity along the radial direction of the motor, so that the end cavity guides the motor stator into the stator cavity. This prevents the motor stator and the end cavity from being worn, reduces assembling difficulty, and improves assembling efficiency of the motor. In addition, to improve a matching degree between an inner wall of the stator cavity and the motor stator, an inner wall of the end cavity is not worn during machining of the inner wall of the stator cavity. This prevents an air hole on the inner wall of the end cavity from reducing sealing performance, and prevents oil leakage. The inner wall of the end cavity is a rough surface, and the inner wall of the stator cavity is a machining surface. A surface roughness of the rough surface is greater than a surface roughness of the machining surface. In embodiments of this application, a surface roughness of the inner wall of the stator cavity is small, and the inner wall of the stator cavity is smoother than the inner wall of the end cavity. This helps improve assembling precision between the motor stator and the stator cavity, and ensures structural reliability of the motor stator and the motor housing.

The motor provided in this application may be used in a powertrain, and the powertrain including the motor in this application may be used in an electric vehicle.

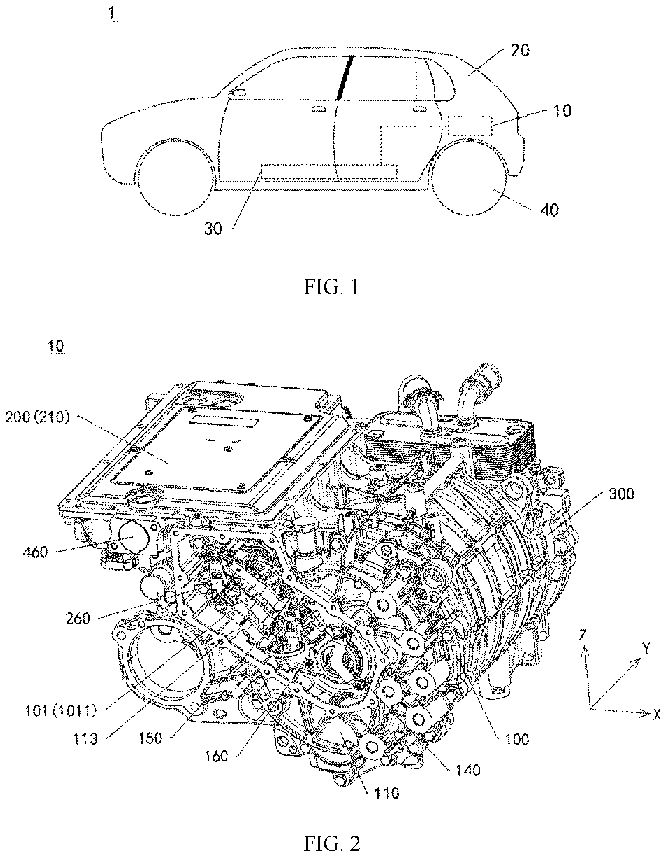

FIG. 1 is a diagram of a structure of an electric vehicle 1 according to an embodiment of this application. In this embodiment of this application, the electric vehicle 1 includes a powertrain 10, a vehicle body 20, a battery pack 30, and wheels 40. The powertrain 10 and the battery pack 30 are fastened to the vehicle body 20. The powertrain 10 is configured to receive power supplied by the battery pack 30, and is configured to drive the wheels 40.

In this embodiment of this application, the battery pack 30 may also be referred to as a power battery.

In this embodiment of this application, the electric vehicle 1 is a wheeled device driven or pulled by a power apparatus. In an embodiment, the electric vehicle 1 includes a special operation vehicle, for example, a passenger vehicle, a commercial vehicle, an engineering rescue vehicle, a sprinkler, a suction sewage truck, a cement mixer, a crane, or a medical vehicle. For example, the electric vehicle 1 includes an electric vehicle (Electric Vehicle, EV), a pure electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), a new energy vehicle (New Energy Vehicle), or the like.

In this embodiment of this application, the electric vehicle 1 includes one or more powertrains 10. In an embodiment, the electric vehicle 1 is a front or rear-wheel drive vehicle. The electric vehicle 1 includes one powertrain 10, and the powertrain 10 is configured to be in transmission connection to front wheels or rear wheels of the electric vehicle 1. In an embodiment, the electric vehicle 1 is a front-rear-wheel dual-drive vehicle. The electric vehicle 1 includes two powertrains 10. The two powertrains 10 are respectively configured to be in transmission connection to a front wheel and a rear wheel of the electric vehicle 1. In an embodiment, the electric vehicle 1 is a front-rear-wheel four-drive vehicle. The electric vehicle 1 includes four powertrains 10. The four powertrains 10 are respectively configured to be in transmission connection to four wheels of the electric vehicle 1.

FIG. 2 is a diagram of a structure of the powertrain 10 according to this embodiment of this application. In this embodiment, the powertrain 10 includes a motor 100. A direct current output by the battery pack 30 is converted into an alternating current in the powertrain 10 and then the alternating current is transmitted to the motor 100, to drive a motor shaft 140 of the motor 100 to rotate, and provide power for the wheels 40.

In this embodiment, the powertrain 10 further includes a motor control unit 200 and a reducer 300. The motor 100 is separately connected to the motor control unit 200 and the reducer 300. The motor control unit 200 is configured to convert a direct current into an alternating current and transmit the alternating current to the motor 100. The motor 100 converts electric energy into mechanical energy. An output end of the motor shaft transmits power to the wheels 40 of the electric vehicle 1 by using the reducer 300, to drive the wheels 40 to rotate.

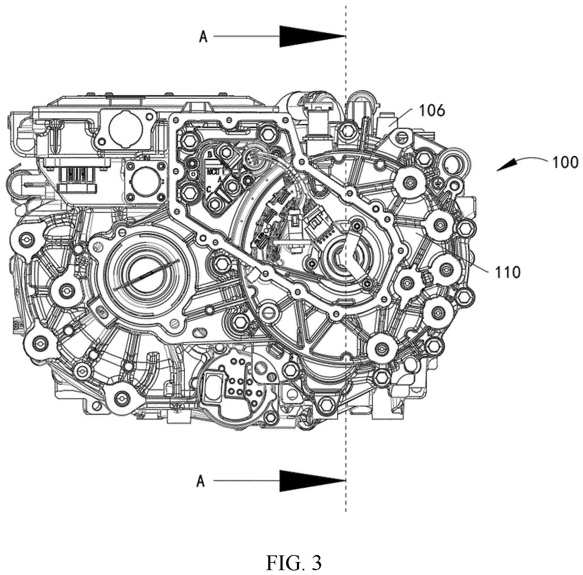

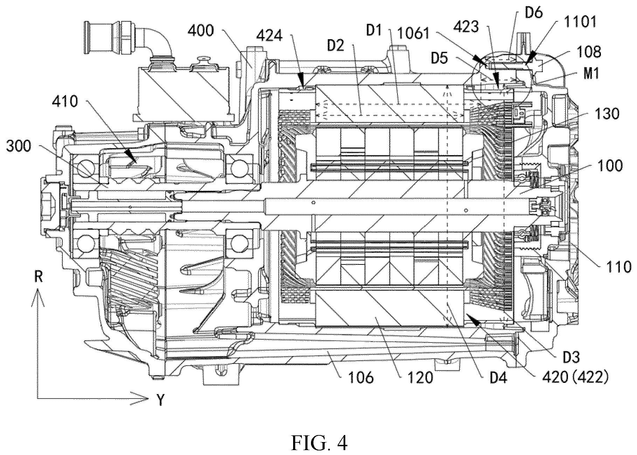

FIG. 3 is a diagram of a structure of the motor 100 according to this embodiment of this application. FIG. 4 is a sectional view of the motor 100 shown in FIG. 3 along AA. In this embodiment, the motor 100 includes a motor housing 106 and a motor stator 120 (as shown in FIG. 3 and FIG. 4), the motor housing 106 includes a motor accommodating cavity 420 (as shown in FIG. 4), and the motor accommodating cavity 420 penetrates the motor housing 106 along an axial direction Y of the motor (as shown in FIG. 4). The motor accommodating cavity 420 is configured to fasten the motor stator 120. The motor accommodating cavity 420 includes a stator cavity 422 and an end cavity 423 (as shown in FIG. 4). The stator cavity 422 and the end cavity 423 are arranged adjacent to each other (as shown in FIG. 4). A length of the stator cavity 422 is greater than or equal to a length of the motor stator 120 along the axial direction Y of the motor (as shown in FIG. 4). An inner diameter of the end cavity 423 is greater than an inner diameter of the stator cavity 422 along a radial direction R of the motor (as shown in FIG. 4).

In this embodiment of this application, the motor 100 is configured to convert the electric energy into the mechanical energy. Specifically, in this embodiment, the motor 100 further includes the motor shaft, a motor rotor, and a motor winding. After an alternating current is supplied to the motor winding, an alternating flux is generated. The alternating flux generated by the motor winding interacts with a permanent magnetic flux generated by the motor rotor, so that the motor rotor rotates relative to the motor stator 120; the motor rotor is fastened to the motor shaft, so that the motor shaft rotates following the motor rotor; and the motor stator 120 is rotatably connected to the motor shaft, so that the motor shaft can rotate relative to the motor stator 120 to convert the electric energy into the mechanical energy, and an output end of the motor shaft is configured to transmit the mechanical energy.

In this embodiment of this application, the motor housing 106 is configured to protect the motor stator 120 from interference from an external environment. An inner wall of the motor housing 106 is enclosed to form the motor accommodating cavity 420, and the motor accommodating cavity 420 is configured to accommodate and fasten the motor stator 120. To cooperate with the motor stator and the motor rotor to implement rotation of the motor shaft, the motor stator and the motor rotor are generally cylindrical. Therefore, the motor accommodating cavity 420 is generally cylindrical. The motor accommodating cavity 420 includes a stator cavity 422 and an end cavity 423 that are arranged adjacent to each other. When the motor stator 120 is assembled into the motor housing 106, the motor stator 120 passes through the end cavity 423 to reach the stator cavity 422. An assembling status of the motor stator 120 is important in assembling of other components in the motor 100.

Still refer to FIG. 4. A length of the stator cavity 422 along the axial direction Y of the motor is denoted as D1, a length of the motor stator 120 along the axial direction Y of the motor is denoted as D2, a length of the end cavity 423 along the radial direction R of the motor is denoted as D3, and a length of the stator cavity 422 along the radial direction R of the motor is denoted as D4. In this solution, D1≥D2 is set, and a projection of the stator cavity 422 along the radial direction R of the motor can fully cover a projection of the motor stator 120 along the radial direction R of the motor, so that the stator cavity 422 accommodates the motor stator 120 along the axial direction Y of the motor. D3>D4 is set, so that in an assembling process of the motor stator 120, the motor stator 120 and the end cavity 423 are not worn or stuck in the end cavity 423. In addition, because the end cavity 423 and the stator cavity 422 are arranged adjacent to each other, the end cavity 423 can further guide assembling and disassembling of the motor stator 120. This helps reduce difficulty in disassembling and assembling the motor stator 120 and improves assembling efficiency of the motor 100. To improve a matching degree between an inner wall of the stator cavity 422 and the motor stator 120, the inner wall of the stator cavity 422 is machined, so that a matching degree between the inner wall of the stator cavity 422 and an outer surface of the motor stator 120 is higher, and structural strength of the motor stator 120 and the motor housing 106 is higher. When D3>D4 is set, an inner wall of the end cavity 423 is not worn during machining of the inner wall of the stator cavity 422. This prevents an air hole on the inner wall of the end cavity 423 from reducing sealing performance.

In this embodiment of this application, the motor 100 is disposed, and the length of the stator cavity 422 is greater than or equal to the length of the motor stator 120 along the axial direction Y of the motor, so that the stator cavity 422 can fully accommodate the motor stator 120 along the axial direction Y of the motor. In addition, the inner diameter of the end cavity 423 is greater than the inner diameter of the stator cavity 422 along the radial direction R of the motor. This prevents the end cavity 423 from obstructing assembling of the motor stator 120. In addition, the end cavity 423 can be further configured to guide an electric stator to be assembled to the stator cavity 422. This improves assembling efficiency. The inner wall of the end cavity 423 is not worn during machining of the inner wall of the stator cavity 422. This prevents an air hole on the inner wall of the end cavity 423 from reducing sealing performance.

It should be noted that, in this embodiment of this application, a projection along the axial direction Y of the motor is a projection along the axial direction Y of the motor on a projection surface perpendicular to the axial direction Y of the motor. The projection surface of the projection along the axial direction Y of the motor is perpendicular to the axial direction Y of the motor. A projection along the radial direction R of the motor is a projection along the radial direction R of the motor on a projection surface perpendicular to the radial direction R of the motor. The projection surface of the projection along the radial direction R of the motor is perpendicular to the radial direction R of the motor. In an embodiment, a projection surface of the stator cavity 422 along the radial direction R of the motor is the same as a projection surface of the motor stator 120 along the radial direction R of the motor. A projection of the stator cavity 422 along the radial direction R of the motor is a projection of an area enclosed by a cavity wall of the stator cavity 422 along the radial direction R of the motor.

In an embodiment, surface roughness of the inner wall of the end cavity 423 is greater than surface roughness of the inner wall of the stator cavity 422. The surface roughness means unevenness of a surface with a small spacing and a tiny peak and valley. Smaller surface roughness indicates a smoother surface. In this embodiment of this application, the surface roughness of the inner wall of the stator cavity 422 is small, and the inner wall of the stator cavity 422 is smoother than the inner wall of the end cavity 423. This helps improve assembling precision between the motor stator 120 and the stator cavity 422, and ensures structural reliability of the motor stator 120 and the motor housing 106. The surface roughness of the inner wall of the end cavity 423 is large, and processing costs can be reduced. The inner diameter of the end cavity 423 is greater than the inner diameter of the stator cavity 422 along the radial direction R of the motor, and the surface roughness of the inner wall of the end cavity 423 does not cause negative impact on mounting of the motor stator 120.

In an embodiment, a quantity of air holes on the inner wall of the stator cavity 422 is greater than a quantity of air holes on the inner wall of the end cavity 423. When die casting is performed on the motor housing 106, air holes are easily generated in the motor housing 106, and a plurality of air holes communicate with each other and form an air hole path (not shown in the figure). When the plurality of air holes communicate with each other along the radial direction R of the motor, cooling oil in the motor accommodating cavity 420 leaks. After the inner wall of the stator cavity 422 is cut, some air holes may be exposed. However, the inner wall of the stator cavity 422 is configured to precisely cooperate with the motor stator 120. For example, the motor stator 120 is in an interference fit with the inner wall of the stator cavity 422, so that there are few gaps or no gap between the motor stator 120 and the inner wall of the stator cavity 422, and the inner wall of the stator cavity 422 are machined. Even if a part of the air hole is exposed, sealing performance inside the motor accommodating cavity 420 is not affected. However, the inner wall of the end cavity 423 does not closely cooperate with another mechanical part. If a large quantity of air holes are on the inner wall of the end cavity 423, the cooling oil may leak from a hole path for air holes communicating with each other. In this solution, the surface roughness of the inner wall of the end cavity 423 is set to be greater than the surface roughness of the inner wall of the stator cavity 422, or a cutting degree of the inner wall of the end cavity 423 is set to be less than a cutting degree of the inner wall of the stator cavity 422, so that there are fewer air holes on the inner wall of the end cavity 423, blocking circulation of cooling oil in the air holes, and reducing a risk of cooling oil leakage.

In an embodiment, the inner wall of the end cavity 423 is a rough surface, and the inner wall of the stator cavity 422 is a machining surface. In this embodiment of this application, the rough surface is a surface formed through die casting, an inner wall of the machining surface has a cutting mark, and an inner wall of the rough surface has no cutting mark. In this embodiment of this application, density of the rough surface is greater than density of the machining surface. The motor housing 106 is formed through die casting. The inner wall of the end cavity 423 is the rough surface with high density. The inner wall of the end cavity 423 has no air hole or has only a few air holes, and the inner wall of the end cavity 423 has higher sealing performance. In this embodiment of this application, the inner wall of the machining surface has a cutting mark, the inner wall of the rough surface has no cutting mark, and surface roughness of the rough surface is greater than surface roughness of the machining surface.

In an embodiment, types of the cooling oil include glycol-based cooling oil, synthetic oil, and mineral oil. For example, the cooling oil is the glycol-based cooling oil.

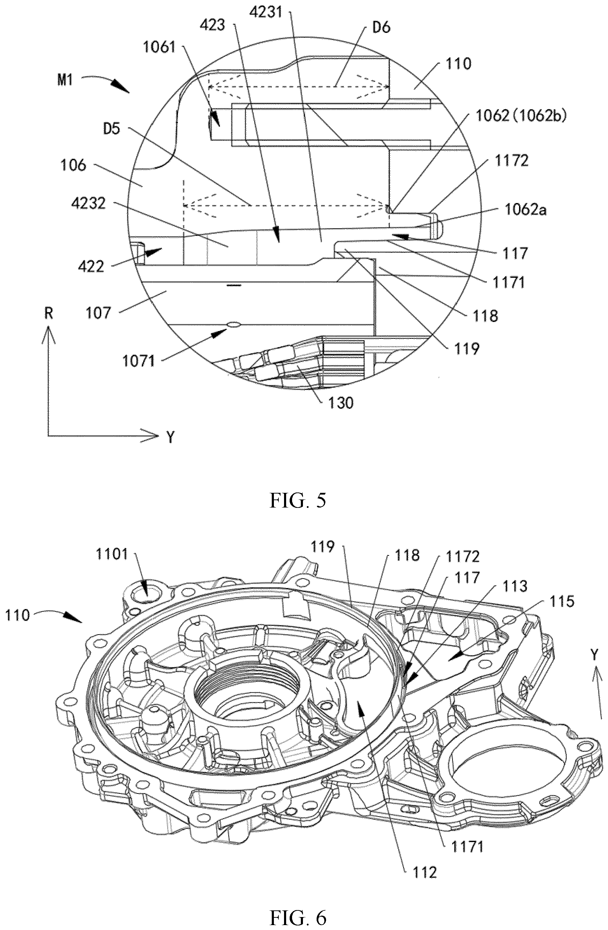

Refer to FIG. 4 and FIG. 5. FIG. 5 is a partial enlarged diagram of an M1 part of the motor 100 shown in FIG. 4. In an embodiment, one end of the end cavity 423 and the other end of the end cavity 423 are arranged along the axial direction Y of the motor (as shown in FIG. 4 and FIG. 5), and a diameter of one end of the end cavity 423 is greater than a diameter of the other end of the end cavity 423 (as shown in FIG. 4 and FIG. 5). The other end of the end cavity 423 is adjacent to the stator cavity 422 (as shown in FIG. 4 and FIG. 5).

In this embodiment of this application, the one end of the end cavity 423, the other end of the end cavity 423, and the stator cavity 422 are sequentially arranged along the axial direction Y of the motor. Along the axial direction Y of the motor, the diameter of the one end of the end cavity 423 is greater than the diameter of the other end of the end cavity 423, so that in a process of assembling the motor stator 120, the one end of the end cavity 423 and the other end of the end cavity 423 can guide the motor stator 120.

Still refer to FIG. 4 and FIG. 5. In an embodiment, the inner wall of the end cavity 423 includes a draft angle section 4231 and a transition fillet section 4232, where the draft angle section 4231, the transition fillet section 4232, and the stator cavity 422 are sequentially arranged adjacent to each other along the axial direction Y of the motor. One end of the draft angle section 4231 and the other end of the draft angle section 4231 are arranged opposite to each other along the axial direction Y of the motor, the other end of the draft angle section 4231 is adjacent to the transition fillet section 4232, and a diameter of the draft angle section 4231 gradually decreases from the one end of the draft angle section 4231 to the other end of the draft angle section 4231. An inner wall of the transition fillet section 4232 is arc-shaped.

In this embodiment of this application, to reduce a surface roughness of the inner wall of the stator cavity 422, the inner wall of the stator cavity 422 needs to be machined by using a mold. In this solution, the diameter of the draft angle section 4231 gradually decreases from the one end of the draft angle section 4231 to the other end of the draft angle section 4231, which is equivalent to that there is an included angle between an extension direction of the draft angle section 4231 and the axial direction Y of the motor, so that the mold used for processing can be smoothly detached from the motor accommodating cavity 420. This prevents the inner wall of the motor accommodating cavity 420 from being worn. The transition fillet section 4232 is disposed between the draft angle section 4231 and the inner wall of the stator cavity 422. This helps reduce stress concentration and strengthen structural strength of the motor housing 106.

Still refer to FIG. 4 and FIG. 5. In an embodiment, along the axial direction Y of the motor, a length of the end cavity 423 is less than the length of the stator cavity 422 (as shown in FIG. 4 and FIG. 5), the length of the end cavity 423 is less than the length of the motor stator 120 (as shown in FIG. 4 and FIG. 5), and the length of the motor stator 120 is less than the length of the stator cavity 422 (as shown in FIG. 4). In this embodiment of this application, the length of the end cavity 423 along the axial direction Y of the motor is denoted as D5 (as shown in FIG. 5). Because the end cavity 423 does not need to be configured to accommodate the motor stator 120, D5<D1 and D5<D2 are set in this solution. A volume and manufacturing costs of the motor housing 106 are reduced without affecting assembling and fastening of the motor stator 120. D2<D1 is set, and a projection of the stator cavity 422 along the axial direction Y of the motor can fully cover a projection of the motor stator 120 along the axial direction Y of the motor, so that the stator cavity 422 accommodates the motor stator 120 along the axial direction Y of the motor.

Still refer to FIG. 4. In an embodiment, the motor accommodating cavity 420 further includes an inner cavity 424. The inner cavity 424, the stator cavity 422, and the end cavity 423 are sequentially arranged adjacent to each other along the axial direction Y of the motor. The inner cavity 424 is configured to accommodate a part of the motor winding 130 on a side that is of the motor stator 120 and that is away from the motor end cover 110. In an embodiment, the inner wall of the inner cavity 424 is a rough surface.

Still refer to FIG. 4 and FIG. 5. In an embodiment, the motor housing 106 further includes a bolt hole 1061 (as shown in FIG. 4 and FIG. 5). The bolt hole 1061 is configured to fasten the motor housing 106 and the motor end cover 110. A projection of the bolt hole 1061 is located in a projection of the end cavity 423 (as shown in FIG. 5) along the radial direction R of the motor. Along the axial direction Y of the motor, a length of the bolt hole 1061 is less than the length of the end cavity 423 (as shown in FIG. 5).

In this embodiment of this application, the motor end cover 110 is close to the adjacent end cavity 423 along the axial direction Y of the motor, and the motor housing 106 and the motor end cover 110 are fastened through the bolt hole 1061. This helps enhance structural strength of the motor 100. An opening of the bolt hole 1061 faces the motor end cover 110 along the axial direction Y of the motor. The length of the bolt hole 1061 along the axial direction Y of the motor is denoted as D6 (as shown in FIG. 5), and D6<D5 is set, so that the projection of the end cavity 423 along the radial direction R of the motor can cover the projection of the bolt hole 1061 along the radial direction R of the motor. The surface roughness of the inner wall of the end cavity 423 is large and density is high. In this way, this prevents cooling oil in the motor 100 from flowing into the bolt hole 1061 through the inner wall of the end cavity 423. Generally, the bolt hole 1061 is formed in the motor housing 106 through machining, and an air hole is exposed on an inner wall of the bolt hole 1061. If the inner wall of the end cavity 423 opposite to the bolt hole 1061 also has an air hole, the bolt hole 1061 may communicate with the air hole on the inner wall of the end cavity 423. This increases a risk of cooling oil leakage. In this application, the bolt hole 1061 is opposite to the end cavity 423 having the rough surface, and the projection of the bolt hole 1061 along the radial direction R of the motor is located in the projection of the end cavity 423. This improves sealing performance and reduces the risk of cooling oil leakage.

Still refer to FIG. 4 and FIG. 5. Along the radial direction R of the motor, a distance between the inner wall of the end cavity 423 and the bolt hole 1061 is greater than a distance between the inner wall of the stator cavity 422 and an outer surface of the motor housing 106 (as shown in FIG. 4 and FIG. 5). In this embodiment of this application, the distance between the inner wall of the end cavity 423 and the bolt hole 1061 is large along the radial direction R of the motor, and the bolt hole 1061 and the inner wall of the stator cavity 422 do not overlap along the radial direction R of the motor, so that a distance between the bolt hole 1061 and the inner wall of the stator cavity 422 is long. In this way, even if there are air holes in the bolt hole 1061 and the inner wall of the stator cavity 422 due to machining, because a transmission path of the cooling oil between the inner wall of the stator cavity 422 and the bolt hole 1061 is long, the cooling oil is difficult to enter the bolt hole 1061. This effectively avoids cooling oil leakage.

It should be noted that, in this embodiment of this application, a projection along the radial direction R of the motor is a projection along the radial direction R of the motor on a projection surface perpendicular to the radial direction R of the motor. The projection surface of the projection along the radial direction R of the motor is perpendicular to the radial direction R of the motor. In this embodiment of this application, a projection surface of the bolt hole 1061 along the radial direction R of the motor is the same as a projection surface of the end cavity 423 along the axial direction Y of the motor.

In an embodiment, an axis of the bolt hole 1061 is parallel to the axial direction Y of the motor, and along the axial direction Y of the motor, a distance between the bolt hole 1061 and the motor stator 120 is greater than a distance between the end cavity 423 and the motor stator 120. This solution helps prevent the cooling oil from entering the bolt hole 1061 through the inner wall of the motor accommodating cavity 420.

In an embodiment, a surface roughness of the inner wall of the end cavity 423 is greater than a surface roughness of a hole wall of the bolt hole 1061. In this embodiment of this application, to effectively fasten the motor housing 106 and the motor end cover 110, the surface roughness of the hole wall of the bolt hole 1061 needs to be set to be small, that is, the bolt hole 1061 needs to be processed. Similar to the inner wall of the stator cavity 422, the inner wall of the bolt hole 1061 also has an air hole exposed. If the cooling oil flows into the bolt hole 1061 through the air hole, because a hole diameter of the bolt hole 1061 is far greater than a hole diameter of the air hole (not shown in the figure), not only a leakage amount of the cooling oil is increased, but also a connection relationship between the motor end cover 110 and the motor housing 106 is affected. This causes a loose connection relationship. In this solution, the surface roughness of the inner wall of the end cavity 423 is set to be greater than the surface roughness of the hole wall of the bolt hole 1061. Because the inner wall of the end cavity 423 does not expose the air hole, this effectively avoids cooling oil leakage and loose connection relationship.

Refer to FIG. 4 to FIG. 6. FIG. 6 is a diagram of a structure of the motor end cover 110 according to this embodiment of this application. In this embodiment, the motor 100 further includes the motor end cover 110 (as shown in FIG. 4 to FIG. 6), the motor end cover 110 includes a housing limiting slot 117 (as shown in FIG. 5 and FIG. 6), the motor housing 106 includes a housing limiting protrusion 1062 (as shown in FIG. 5 and FIG. 6), and the housing limiting slot 117 is configured to accommodate the housing limiting protrusion 1062. Along the axial direction Y of the motor, the housing limiting slot 117 is recessed from the motor end cover 110 away from the motor stator 120 (as shown in FIG. 4 to FIG. 6), and the housing limiting protrusion 1062 protrudes from the motor housing 106 toward the motor end cover 110 (as shown in FIG. 4 to FIG. 6). Along the radial direction R of the motor, the housing limiting protrusion 1062 and the bolt hole 1061 are spaced from each other (as shown in FIG. 4 and FIG. 5). Along a circumferential direction C of the motor, the housing limiting slot 117 and the housing limiting protrusion 1062 each surround the motor shaft 140 axis (as shown in FIG. 6).

In an embodiment, the housing limiting slot 117 and the housing limiting protrusion 1062 form a pair of spigot structures. A recessed direction of the housing limiting slot 117 is the same as a protrusion direction of the housing limiting protrusion 1062. The housing limiting protrusion 1062 is located in the housing limiting slot 117, and the housing limiting slot 117 and the housing limiting protrusion 1062 each surround the motor shaft 140 axis along the circumferential direction C of the motor. This helps strengthen fastening between the motor end cover 110 and the motor housing 106.

Still refer to FIG. 5 and FIG. 6. In this embodiment, the housing limiting slot 117 includes an inner slot wall 1171 and an outer slot wall 1172 (as shown in FIG. 5 and FIG. 6), and the housing limiting protrusion 1062 includes an inner wall 1062a of the protrusion and an outer wall 1062b of the protrusion (as shown in FIG. 5). The inner slot wall 1171, the inner wall 1062a of the protrusion, the outer wall 1062b of the protrusion, and the outer slot wall 1172 are arranged along the radial direction R of the motor (as shown in FIG. 5 and FIG. 6). The inner wall 1062a of the protrusion and the inner slot wall 1171 are spaced from each other along the radial direction R of the motor (as shown in FIG. 5), and the outer wall 1062b of the protrusion is attached to the outer slot wall 1172 (as shown in FIG. 5).

In this embodiment of this application, the motor end cover 110 and the motor housing 106 are jointly configured to protect internal components such as the motor stator 120. In a process of assembling the motor housing 106 and the motor end cover 110, the bolt hole 1061 is mainly used for fastening, and the housing limiting protrusion 1062 and the housing limiting slot 117 are used for positioning and auxiliary fastening. The inner wall 1062a of the protrusion and the inner slot wall 1171 are spaced from each other along the radial direction R of the motor, to provide an assembling gap between the motor housing 106 and the motor end cover 110, so that the housing limiting protrusion 1062 can be smoothly mounted in the housing limiting slot 117, and the outer wall 1062b of the protrusion is attached to the outer slot wall 1172 along the radial direction R of the motor, to implement radial positioning between the motor housing 106 and the motor end cover 110. In this embodiment, the outer wall 1062b of the protrusion is in interference fit with the outer slot wall 1172 along the radial direction R of the motor.

In this embodiment, along the radial direction R of the motor, a length of the housing limiting protrusion 1062 is less than a length of the housing limiting slot 117. This solution helps reduce difficulty in disassembling and assembling the motor housing 106 and the motor end cover 110. If the length of the housing limiting protrusion 1062 along the radial direction R of the motor is greater than or equal to the length of the housing limiting slot along the radial direction R of the motor, it is difficult to assemble the motor housing 106 and the motor end cover 110.

In this embodiment, a surface roughness of the inner wall 1062a of the protrusion is greater than a surface roughness of the outer wall 1062b of the protrusion, and a surface roughness of the inner slot wall 1171 is greater than a surface roughness of the outer slot wall 1172. The inner wall of the stator cavity 422, the inner wall of the end cavity 423, and the inner wall 1062a of the protrusion are sequentially arranged adjacent to each other along the axial direction Y of the motor. Along the radial direction R of the motor, a distance between the inner wall 1062a of the protrusion and the outer wall 1062b of the protrusion is less than the distance between the inner wall of the end cavity 423 and the bolt hole 1061.

In this embodiment of this application, the inner wall of the end cavity 423 and the inner wall 1062a of the protrusion are arranged adjacent to each other along the axial direction Y of the motor. The surface roughness of the inner wall 1062a of the protrusion is set to be greater than the surface roughness of the outer wall 1062b of the protrusion. This reduces processing difficulty and costs of the inner wall 1062a of the protrusion and the inner wall of the end cavity 423, and can prevent the cooling oil from leaking through the inner wall 1062a of the protrusion. The surface roughness of the outer wall 1062b of the protrusion is smaller than the surface roughness of the inner wall 1062a of the protrusion, and the surface roughness of the outer slot wall 1172 is smaller than the surface roughness of the inner slot wall 1171. Surfaces of the outer wall 1062b of the protrusion and the outer slot wall 1172 are smooth after processing, so that the outer wall 1062b of the protrusion is more closely attached to the outer slot wall 1172. This strengthens a connection relationship between the motor end cover 110 and the motor housing 106, and improves the structure strength. In addition, the outer wall 1062b of the protrusion and the outer slot wall 1172 are closely attached to each other. This further helps enhance sealing effect, and avoids a risk of cooling oil leakage.

In this embodiment, the housing limiting protrusion 1062 and the motor housing 106 are an integrated structure, so that overall structure strength of the motor housing 106 is higher. In this embodiment, both the inner wall 1062a of the protrusion in the housing limiting protrusion 1062 and the inner wall of the end cavity 423 are rough surface inner walls, both the inner wall 1062a of the protrusion in the housing limiting protrusion 1062 and the inner wall of the end cavity 423 have a draft angle during extrusion, and an inner diameter of the housing limiting protrusion 1062 is greater than a diameter of the end cavity 423.

Still refer to FIG. 5. In an embodiment, the motor 100 further includes a guiding ring 107, a motor winding 130, and an axial limiting protrusion 118 of the guiding ring. The axial limiting protrusion 118 of the guiding ring is fastened to the motor end cover 110. The guiding ring 107 is fastened between the axial limiting protrusion 118 of the guiding ring and the motor stator 120 along the axial direction Y of the motor. The guiding ring 107 includes a guiding hole 1071. The end cavity 423 is configured to accommodate a part of the guiding ring 107 and a part of the motor winding 130.

The axial limiting protrusion 118 of the guiding ring and the housing limiting slot 117 are arranged adjacent to each other along the radial direction R of the motor. Along the radial direction R of the motor, the guiding hole 1071 penetrates the guiding ring 107, and the motor winding 130, the guiding ring 107, and the inner wall of the end cavity 423 are spaced from each other. Along the radial direction R of the motor, a projection of the motor winding 130 partially overlaps a projection of the guiding ring 107 along the radial direction R of the motor, the projection of the motor winding 130 partially overlaps a projection of the guiding hole 1071 along the radial direction R of the motor, a projection of the guiding ring 107 partially overlaps a projection of the end cavity 423, and the projection of the guiding ring 107 partially overlaps a projection of the stator cavity 422.

In this embodiment of this application, the motor winding 130 is configured to receive an alternating current and generate an alternating flux. When the motor 100 is in a working state, the motor winding 130 generates heat. Therefore, cooling and heat dissipation need to be performed on the motor winding 130. In this solution, the guiding ring 107 and the axial limiting protrusion 118 of the guiding ring are disposed in the motor 100. The axial limiting protrusion 118 of the guiding ring is configured to fasten the guiding ring 107 along the axial direction Y of the motor to a side that is of the motor stator 120 and that is close to the motor end cover 110. A part of the guiding ring 107 is located in the end cavity 423, and a part of the guiding ring 107 is located in the stator cavity 422. The guiding ring 107 is provided with a guiding hole 1071 penetrating the guiding ring 107. Along the radial direction R of the motor, a projection of the motor winding 130 partially overlaps each of the projection of the guiding ring 107 and a projection of the guiding hole 1071, so that the cooling oil can cool the motor winding 130 through the guiding hole 1071 on the guiding ring 107. This improves working efficiency of the motor 100.

In this embodiment of this application, the guiding ring 107 and the inner wall of the end cavity 423 are spaced from each other, and the projection of the guiding ring 107 along the radial direction R of the motor partially overlaps the projection of the end cavity 423. Because the surface roughness of the inner wall of the end cavity 423 is large, there is a spacing between the guiding ring 107 and the inner wall of the end cavity 423 along the radial direction R of the motor, so that the cooling oil can flow from the guiding ring 107, and flows to the motor winding 130 through the guiding hole 1071. This improves utilization of the cooling oil. The axial limiting protrusion 118 of the guiding ring and the housing limiting slot 117 are arranged adjacent to each other along the radial direction R of the motor, and a structure layout is compact. This helps reduce a volume of the motor 100 and implements a miniaturization design.

In an embodiment, the axial limiting protrusion 118 of the guiding ring and the motor end cover 110 are integrally formed. This solution helps enhance overall structural strength of the axial limiting protrusion 118 of the guiding ring and the motor end cover 110, and improve an axial limiting function of the guiding ring 107, so that when the motor 100 is in a high-speed working condition, the guiding hole 1071 of the guiding ring 107 can stably cool and dissipate heat for the motor winding 130.

Still refer to FIG. 5. In an embodiment, the motor 100 further includes a radial limiting portion 119 of the guiding ring. Along the axial direction Y of the motor, the radial limiting portion 119 of the guiding ring, the axial limiting protrusion 118 of the guiding ring, and the motor end cover 110 are sequentially arranged adjacent to each other and fastened relative to each other, and a projection area of the radial limiting portion 119 of the guiding ring along the axial direction Y of the motor is less than a projection area of the axial limiting protrusion 118 of the guiding ring along the axial direction Y of the motor.

Along the radial direction R of the motor, the guiding ring 107, the radial limiting portion 119 of the guiding ring, and the inner wall of the end cavity 423 are sequentially arranged, the guiding ring 107 is adjacent to the radial limiting portion 119 of the guiding ring, the radial limiting portion 119 of the guiding ring and the inner wall of the end cavity 423 are spaced from each other, and the projection of the guiding ring 107 partially overlaps a projection of the radial limiting portion 119 of the guiding ring along the radial direction R of the motor.

In this embodiment of this application, along the radial direction R of the motor, the radial limiting portion 119 of the guiding ring and the guiding ring 107 are disposed adjacent to each other, and the projection of the guiding ring 107 partially overlaps the projection of the radial limiting portion 119 of the guiding ring along the radial direction R of the motor, so that the radial limiting portion 119 of the guiding ring can limit movement of the guiding ring 107 along the radial direction R of the motor. Along the radial direction R of the motor, the radial limiting portion 119 of the guiding ring is located between the guiding ring 107 and the inner wall of the end cavity 423, and the radial limiting portion 119 of the guiding ring and the inner wall of the end cavity 423 are spaced from each other, so that the housing limiting protrusion 1062 can smoothly enter the housing limiting slot 117 through a gap between the radial limiting portion 119 of the guiding ring and the inner wall of the end cavity 423. Along the axial direction Y of the motor, the projection area of the radial limiting portion 119 of the guiding ring is less than the axial limiting protrusion 118 of the guiding ring, so that the radial limiting portion 119 of the guiding ring does not block a connection between the axial limiting protrusion 118 of the guiding ring and the guiding ring 107.

The axial limiting protrusion 118 of the guiding ring is configured to implement axial limiting of the guiding ring 107, the radial limiting portion 119 of the guiding ring is configured to implement radial limiting of the guiding ring 107, and the axial limiting protrusion 118 of the guiding ring cooperates with the radial limiting portion 119 of the guiding ring, so that the guiding ring 107 is not likely to be displaced relative to the motor end cover 110 and the motor stator 120. This helps enhance structural stability of the guiding ring 107.

In an embodiment, the radial limiting portion 119 of the guiding ring, the axial limiting protrusion 118 of the guiding ring, and the motor end cover 110 are integrally formed. This solution helps enhance structural strength of the radial limiting portion 119 of the guiding ring, and improve a radial limiting function of the guiding ring 107, so that when the motor 100 is in a high-speed working condition, the guiding hole 1071 of the guiding ring 107 can stably cool and dissipate heat for the motor winding 130.

Still refer to FIG. 4 to FIG. 6. In an embodiment, the motor end cover 110 further includes a junction screw hole 1101 (as shown in FIG. 4 and FIG. 6), the motor end cover 110 is fastened to the motor housing 106 through a junction bolt 108, and the junction bolt 108 is fastened to the junction screw hole 1101 and a bolt hole 1061 (as shown in FIG. 4 and FIG. 6), where along the axial direction Y of the motor, the junction screw hole 1101 and the bolt hole 1061 are arranged adjacent to each other and communicate with each other (as shown in FIG. 4). Along the radial direction R of the motor, the axial limiting protrusion 118 of the guiding ring, the housing limiting slot 117, and the junction screw hole 1101 are sequentially arranged (as shown in FIG. 4 and FIG. 5).

In this embodiment of this application, the junction bolt 108 sequentially penetrates the junction screw hole 1101 and the bolt hole 1061, to fasten the motor end cover 110 and the motor housing 106, and ensure structural stability of the motor 100. The axial limiting protrusion 118 of the guiding ring, the housing limiting slot 117, and the junction screw hole 1101 are sequentially arranged along the radial direction R of the motor, and a structure layout is regular and compact. This helps reduce a volume of the motor end cover 110.

In an embodiment, the junction screw hole 1101 and the bolt hole 1061 are coaxially disposed. This solution helps reduce mounting difficulty in which the junction bolt 108 penetrates the junction screw hole 1101 and the bolt hole 1061, and improve stability of a connection between the motor end cover 110 and the motor housing 106.

The motor 100 provided in this embodiment of this application may be used as an independent apparatus in cooperation with a motor control unit and a reducer. Alternatively, the motor 100 may be integrated with at least one of the motor control unit and the reducer and used in the powertrain 10.

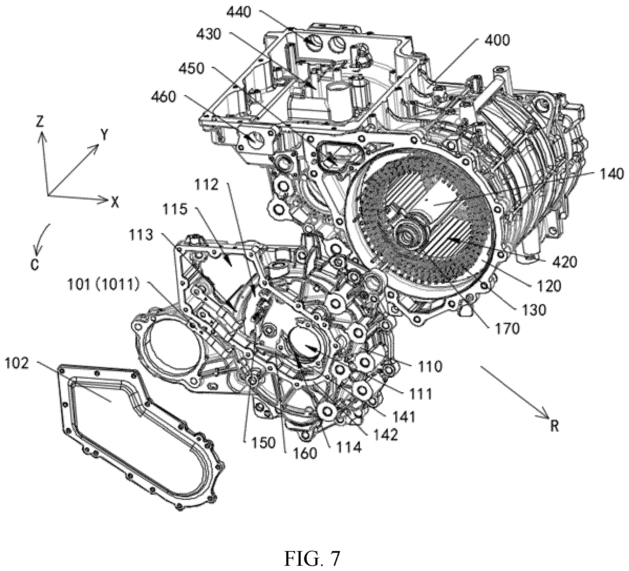

Refer to FIG. 2 and FIG. 7. FIG. 7 is a partial exploded view of a powertrain 10 according to an embodiment of this application. In an embodiment, the powertrain 10 includes a motor control unit 200, a three-phase input copper bar 101, and a motor 100 (as shown in FIG. 2 and FIG. 7), the three-phase input copper bar 101 is electrically connected to a motor winding 130 and a motor control unit 200 (as shown in FIG. 2 and FIG. 7) through a winding wiring hole 112, the three-phase input copper bar 101 includes three input copper bars 1011 (as shown in FIG. 2 and FIG. 7), and the three input copper bars 1011 are sequentially spaced from each other along a circumferential direction C of the motor (as shown in FIG. 2 and FIG. 7).

In this embodiment of this application, the motor control unit 200 includes a capacitor module, a power module, a circuit board, a copper bar assembly, and the like. The motor 100 and the motor control unit 200 are integrated into the powertrain 10. This helps improve integration and power density of the powertrain 10. The three-phase input copper bar 101 is connected to the motor control unit 200 and the motor winding 130. The motor control unit 200 is configured to convert a direct current into an alternating current. The motor control unit 200 outputs the alternating current to the motor winding 130 through the three-phase input copper bar 101. The three input copper bars 1011 in the three-phase input copper bar 101 transmit a three-phase alternating current to the motor winding 130. The three input copper bars 1011 are spaced from each other along the circumferential direction C of the motor. This helps reduce electrical interference between the three input copper bars 1011, and ensures electrical connection stability.

Still refer to FIG. 4. In an embodiment, the powertrain 10 includes an integrated housing 400, the integrated housing 400 includes a reducer accommodating cavity 410 and a motor accommodating cavity 420, the motor housing 106 is an integrated structure, the motor housing 106 is enclosed to form the motor accommodating cavity 420, the motor accommodating cavity 420 is configured to accommodate the motor 100, the reducer accommodating cavity 410 is configured to accommodate a reducer 300, the motor accommodating cavity 420 penetrates the integrated housing 400 along a first direction Y and communicates with the reducer accommodating cavity 410, a motor shaft 140 of the motor 100 is configured to drive the reducer 300, the first direction Y is parallel to an axial direction Y of the motor, and the motor 100 and the reducer 300 are arranged along the first direction Y.

In this embodiment of this application, the axial direction Y of the motor is an axial direction of the motor shaft 140, a radial direction R of the motor is a radial direction of the motor shaft 140, and a circumferential direction of the motor is a circumferential direction of the motor shaft 140. The axial direction Y of the motor is denoted as the first direction Y. The integrated housing 400 is configured to accommodate the reducer 300 and the motor 100. The reducer 300 is located in the reducer accommodating cavity 410, the motor 100 is located in the motor accommodating cavity 420 formed by enclosing the motor housing 106, and the reducer 300 and the motor 100 share one integrated housing 400. In this embodiment of this application, the reducer 300 includes a reducer input shaft, a reducer bearing, a gear assembly, and the like. The motor 100 converts electric energy into mechanical energy, and transmits power to the reducer 300 through the motor shaft 140.

In this embodiment of this application, the integrated housing 400 further includes a reducer housing and a controller housing. The reducer housing is enclosed to form the reducer accommodating cavity 410, and the controller housing is enclosed to form the controller accommodating cavity. In an embodiment, the reducer housing and the motor housing are an integrated structure, or the integrated housing 400 is an integrated structure. In an embodiment, the reducer housing and the motor housing share a part of the adjacent housings.

In this embodiment of this application, the powertrain 10 is a two-in-one powertrain, and the integrated housing 400 is configured to accommodate the reducer 300 and the motor 100. In comparison with a split powertrain, this implementation helps improve integration of the powertrain 10, so that space utilization of the powertrain 10 is increased, and costs are reduced; and stability of an overall structure of the powertrain 10 can be further enhanced in this implementation.

In this embodiment of this application, along the first direction Y, the motor accommodating cavity 420 penetrates the integrated housing 400 and communicates with the reducer accommodating cavity 410, so that the reducer input shaft accommodates a part of the motor shaft 140. The motor end cover 110 and the reducer end cover 310 are separately arranged on two sides of the motor 100 along the first direction Y. The motor end cover 110, the reducer end cover 310, and the integrated housing 400 are jointly configured to protect the motor 100 and the reducer 300 from interference from an external environment, to ensure that the motor 100 and the reducer 300 work normally.

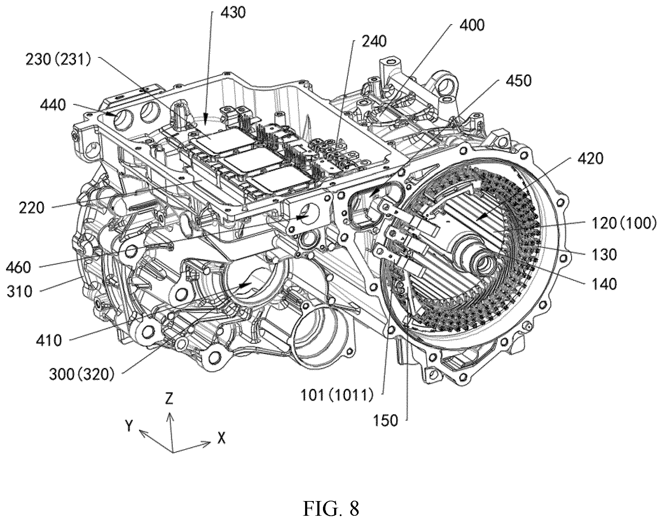

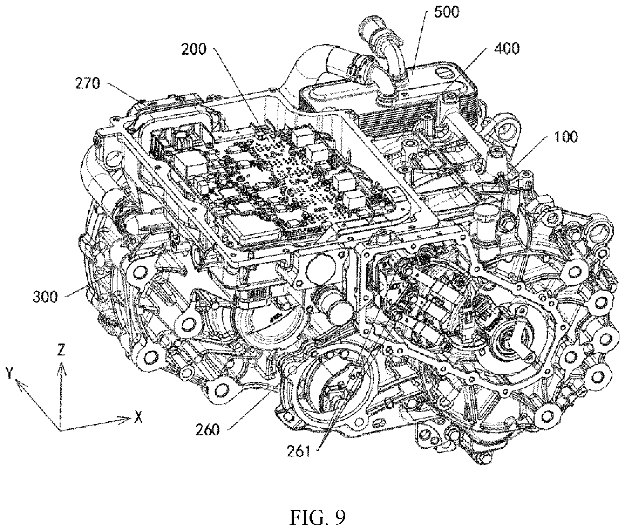

FIG. 8 is a partial diagram of a structure of the powertrain 10 according to this embodiment of this application. FIG. 9 is a partial diagram of a structure of the powertrain 10 according to this embodiment of this application. In an embodiment, the integrated housing 400 further includes a controller accommodating cavity 430, a direct current input interface mounting hole 440, and an alternating current output interface mounting hole 450.

In an embodiment, the motor control unit 200 further includes a direct current input interface 270, and the direct current input interface mounting hole 440 is configured to fasten the direct current input interface 270. The direct current input interface 270 is configured to connect to the battery pack 30 to receive a direct current.

In an embodiment, the motor control unit 200 further includes an alternating current output interface 260, and the alternating current output interface mounting hole 450 is configured to fasten the alternating current output interface 260. The alternating current output interface 260 is connected to a copper bar assembly 240 and the three input copper bars 1011. In this embodiment of this application, the alternating current output interface 260 includes three wiring interfaces 261. The three wiring interfaces 261 are configured to electrically connect to wiring terminals of the motor winding 130 respectively through the three input copper bars 1011, and the three input copper bars 1011 are spaced from each other.

In this embodiment of this application, the controller accommodating cavity 430 is configured to accommodate the motor control unit 200, the controller accommodating cavity 430 and the motor accommodating cavity 420 are arranged along a second direction Z, and the second direction Z is perpendicular to the first direction Y

In this embodiment of this application, the integrated housing 400 is configured to accommodate the internal reducer 300, the motor 100, and the motor control unit 200. The integrated housing 400 includes the reducer housing, the motor housing, and the controller housing. The controller housing is enclosed to form the controller accommodating cavity 430. In an embodiment, the reducer housing, the motor housing, and the controller housing are an integrated structure, or the integrated housing 400 is an integrated structure. In an embodiment, the reducer housing, the motor housing, and the controller housing share a part of the adjacent housings.

In this embodiment of this application, the powertrain 10 is a three-in-one powertrain, and the integrated housing 400 is configured to accommodate the reducer 300, the motor 100, and the motor control unit 200. In comparison with a split powertrain, this implementation helps improve integration of the powertrain, so that space utilization of the powertrain is increased, and costs are reduced; and stability of an overall structure of the powertrain can be further enhanced in this implementation.

Still refer to FIG. 6 and FIG. 7. The motor end cover 110 includes an alternating current output interface communication hole 115, a winding wiring hole 112, and cooling holes 113 (as shown in FIG. 6 and FIG. 7). The three input copper bars 1011 are electrically connected to the motor winding 130 through the winding wiring hole 112. Along the first direction Y, the direct current input interface mounting hole 440 and the alternating current output interface mounting hole 450 each penetrate the integrated housing 400 and are connected to the controller accommodating cavity 430 (as shown in FIG. 6 and FIG. 7). The alternating current output interface communication hole 115, the winding wiring hole 112, and the cooling hole 113 each penetrate the motor end cover 110 (as shown in FIG. 6), the direct current input interface mounting hole 440 and the alternating current output interface mounting hole 450 are arranged opposite to each other (as shown in FIG. 7), a projection of the alternating current output interface communication hole 115 covers a projection of the alternating current output interface mounting hole 450 (as shown in FIG. 6), and a projection of the three-phase input copper bar 101 partially overlaps the projection of the alternating current output interface communication hole 115 (as shown in FIG. 6). Projections of the three input copper bars 1011 partially overlap a projection of the cooling hole 113 (as shown in FIG. 6).

In this embodiment of this application, the alternating current output interface communication hole 115, the cooling hole 113, and the winding wiring hole 112 are integrated into the motor end cover 110, so that a volume of the motor end cover 110 can be reduced, facilitating a miniaturization design and high power density of the motor 100. The direct current input interface mounting hole 440 and the alternating current output interface mounting hole 450 are provided opposite to each other along the first direction Y, and are respectively located at two ends of the controller accommodating cavity 430 along the first direction Y. This helps avoid electrical interference generated in a transmission process of a direct current and an alternating current, and improves security performance. In addition, the alternating current output interface mounting hole 450 is disposed adjacent to the motor 100, so that a distance between the motor control unit 200 and a wiring terminal of the motor 100 is shortened.

In this embodiment of this application, the alternating current output interface mounting hole 450 and the alternating current output interface communication hole 115 are jointly configured to accommodate the alternating current output interface 260. Along the first direction Y, the alternating current output interface communication hole 115 is located on a side that is of the alternating current output interface mounting hole 450 and that is away from the direct current input interface mounting hole 440, and the projection of the alternating current output interface communication hole 115 covers the projection of the alternating current output interface mounting hole 450, so that the alternating current output interface 260 can sequentially penetrate the alternating current output interface mounting hole 450 and the alternating current output interface communication hole 115.

In this embodiment of this application, the three-phase input copper bar 101 is connected to the alternating current output interface 260 and an electrical connector 150. In this solution, the projection of the three-phase input copper bar 101 partially overlaps projections of the winding wiring hole 112 and the alternating current output interface communication hole 115. This helps reduce an energy loss on a transfer path. When the input copper bar 1011 transmits electric energy, a part of electric power is converted into heat. This causes the input copper bar 1011 to heat up. Therefore, in this solution, projections of three input copper bars 1011 are set to partially overlap the projection of the cooling hole 113, so that cooling oil flowing out from the cooling hole can cool and dissipate heat for the input copper bar 1011.

It may be understood that, in this embodiment of this application, because an extension direction of the alternating current output interface communication hole 115 is parallel to or basically parallel to a projection direction (namely, the first direction Y), the projection of the alternating current output interface communication hole 115 is a projection of an area enclosed by the hole wall of the alternating current output interface communication hole 115. The foregoing explanations are also applicable to a projection of another communication hole in this embodiment of this application.

Still refer to FIG. 7. Along the radial direction R of the motor, the winding wiring hole 112 is arranged between the alternating current output interface communication hole 115 and the motor shaft 140, and the cooling hole 113 is arranged between the alternating current output interface communication hole 115 and the winding wiring hole 112.

In this embodiment of this application, along the radial direction R of the motor, the alternating current output interface communication hole 115, the cooling hole 113, the winding wiring hole 112, and the motor shaft 140 are sequentially arranged. A position relationship of the foregoing structure reflects a layout feature of the alternating current output interface 260, the input copper bar 1011, the electrical connector 150, and the motor shaft 140, and complies with a flow direction of energy, shortens a transfer path of energy in the powertrain 10.

Still refer to FIG. 6. Along the first direction Y, the cooling hole 113 and the housing limiting slot 117 of the motor 100 are arranged adjacent to each other, and the cooling hole 113 communicates with the housing limiting slot 117. In this embodiment of this application, the housing limiting slot 117 and the guiding ring 107 are disposed adjacent to each other (as shown in FIG. 5), some cooling oil cools the motor winding 130 through the guiding ring 107, and remaining cooling oil can flow into the cooling hole 113 through the housing limiting slot 117. Because the cooling hole 113 communicates with two sides of the motor end cover 110 along the axial direction Y of the motor, the cooling hole 113 is disposed close to the electrical connector 150 and the three-phase input copper bar 101 (as shown in FIG. 7), and therefore the cooling oil that enters the cooling hole 113 flows out of the motor 100. The electrical connector 150 and the three-phase input copper bar 101 can be further cooled, to ensure that the motor 100 works in a proper temperature range, and improve utilization of the cooling oil.

It should be noted that, in this embodiment of this application, the projection along the first direction Y is a projection along the first direction Y on a projection surface perpendicular to the first direction Y, where the projection surface of the projection along the first direction Y is perpendicular to the first direction Y; the projection along the second direction Z is a projection along the second direction Z on a projection surface perpendicular to the second direction Z, where the projection surface of the projection along the second direction Z is perpendicular to the second direction Z; and a projection along a third direction X is a projection along the third direction X on a projection surface perpendicular to the third direction X, where the projection surface of the projection along the third direction X is perpendicular to the third direction X.

It should be noted that, in embodiments of this application, the projections of the hole, the cavity, and the opening are respectively projections of areas enclosed by the hole wall, the inner wall of the cavity, or the inner wall of the opening of the hole.

The motor, the powertrain, and the electric vehicle provided in embodiments of this application are described in detail above. The principles and embodiments in this application are described in this specification by using specific examples. The descriptions about embodiments are only provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A motor for oil anti-leakage, wherein the motor comprises a motor housing and a motor stator, the motor housing comprises a motor accommodating cavity, the motor accommodating cavity penetrates the motor housing along an axial direction of the motor, the motor accommodating cavity is configured to fasten the motor stator, the motor accommodating cavity comprises a stator cavity and an end cavity, and the stator cavity and the end cavity are arranged adjacent to each other, wherein
along the axial direction of the motor, a length of the stator cavity is greater than or equal to a length of the motor stator;
along a radial direction of the motor, an inner diameter of the end cavity is greater than an inner diameter of the stator cavity; and
an inner wall of the end cavity is a rough surface, and an inner wall of the stator cavity is a machining surface.

2. The motor according to claim **1,** wherein a surface roughness of the rough surface is greater than a surface roughness of the machining surface, or density of the rough surface is greater than density of the machining surface.

3. The motor according to claim **1,** wherein one end of the end cavity and the other end of the end cavity are arranged along the axial direction of the motor, a diameter of the one end of the end cavity is greater than a diameter of the other end of the end cavity, and the other end of the end cavity is adjacent to the stator cavity.

4. The motor according to claim **1,** wherein along the axial direction of the motor, a length of the end cavity is less than the length of the stator cavity, and the length of the end cavity is less than the length of the motor stator; and
a projection of the motor stator along the radial direction of the motor is located in a projection of the stator cavity along the radial direction of the motor.

5. The motor according to claim **1,** wherein the motor housing further comprises a bolt hole, and the bolt hole is configured to fasten the motor housing and a motor end cover, wherein
along the radial direction of the motor, a projection of the bolt hole is located in a projection of the end cavity; and
along the radial direction of the motor, a distance between the inner wall of the end cavity and the bolt hole is greater than a distance between the inner wall of the stator cavity and an outer surface of the motor housing.

6. The motor according to claim 5, wherein a surface roughness of the inner wall of the end cavity is greater than a surface roughness of a hole wall of the bolt hole; or a hole wall of the bolt hole is a machining surface.

7. The motor according to claim 6, wherein the motor further comprises the motor end cover, the motor end cover comprises a housing limiting slot, the motor housing comprises a housing limiting protrusion, and the housing limiting slot is configured to accommodate the housing limiting protrusion, wherein
along the axial direction of the motor, the housing limiting slot is recessed from the motor end cover away from the motor stator, and the housing limiting protrusion protrudes from the motor housing toward the motor end cover;
along the radial direction of the motor, the housing limiting protrusion and the bolt hole are spaced from each other; and
along a circumferential direction of the motor, the housing limiting slot and the housing limiting protrusion each surround a motor axis.

8. The motor according to claim 7, wherein the housing limiting slot comprises an inner slot wall and an outer slot wall, the housing limiting protrusion comprises an inner wall of the protrusion and an outer wall of the protrusion, and the inner slot wall, the inner wall of the protrusion, the outer wall of the protrusion, and the outer slot wall are arranged along the radial direction of the motor;
the inner wall of the protrusion and the inner slot wall are spaced from each other along the radial direction of the motor, and the outer wall of the protrusion is attached to the outer slot wall;
a surface roughness of the inner wall of the protrusion is greater than a surface roughness of the outer wall of the protrusion, and a surface roughness of the inner slot wall is greater than a surface roughness of the outer slot wall;
along the axial direction of the motor, the inner wall of the stator cavity, the inner wall of the end cavity, and the inner wall of the protrusion are sequentially arranged adjacent to each other; and
along the radial direction of the motor, a distance between the inner wall of the protrusion and the outer wall of the protrusion is less than the distance between the inner wall of the end cavity and the bolt hole.

9. The motor according to claim 7, wherein the motor further comprises a guiding ring, a motor winding, and an axial limiting protrusion of the guiding ring, the axial limiting protrusion of the guiding ring is fastened to the motor end cover, the guiding ring is fastened between the axial limiting protrusion of the guiding ring and the motor stator along the axial direction of the motor, the guiding ring comprises a guiding hole, and the end cavity is configured to accommodate a part of the guiding ring and a part of the motor winding, wherein
the axial limiting protrusion of the guiding ring and the housing limiting slot are arranged adjacent to each other along the radial direction of the motor;
along the radial direction of the motor, the guiding hole penetrates the guiding ring, and the motor winding, the guiding ring, and the inner wall of the end cavity are spaced from each other; and
along the radial direction of the motor, a projection of the motor winding partially overlaps a projection of the guiding ring along the radial direction of the motor, the projection of the motor winding partially overlaps a projection of the guiding hole along the radial direction of the motor, a projection of the guiding ring partially overlaps a projection of the end cavity, and the projection of the guiding ring partially overlaps a projection of the stator cavity.

10. The motor according to claim 9, wherein the motor further comprises a radial limiting portion of the guiding ring, wherein
along the axial direction of the motor, the radial limiting portion of the guiding ring, the axial limiting protrusion of the guiding ring, and the motor end cover are sequentially arranged adjacent to each other and fastened relative to each other, and a projection area of the radial limiting portion of the guiding ring along the axial direction of the motor is less than a projection area of the axial limiting protrusion of the guiding ring along the axial direction of the motor; and
along the radial direction of the motor, the guiding ring, the radial limiting portion of the guiding ring, and the inner wall of the end cavity are sequentially arranged, the guiding ring is adjacent to the radial limiting portion of the guiding ring, the radial limiting portion of the guiding ring and the inner wall of the end cavity are spaced from each other, and the projection of the guiding ring partially overlaps a projection of the radial limiting portion of the guiding ring along the radial direction of the motor.

11. A powertrain, wherein the powertrain comprises a motor control unit, a three-phase input copper bar, and the motor according to any one of claims 1 to 10, the motor control unit is electrically connected to a motor winding of the motor through the three-phase input copper bar, the three-phase input copper bar comprises three input copper bars, and the three input copper bars are sequentially spaced from each other along a circumferential direction of the motor.

12. The powertrain according to claim 11, wherein the powertrain comprises an integrated housing, the integrated housing comprises a motor housing, a reducer accommodating cavity, and a motor accommodating cavity, the motor housing is an integrated structure, the motor housing is enclosed to form the motor accommodating cavity, the motor accommodating cavity is configured to accommodate a motor stator, the reducer accommodating cavity is configured to accommodate a reducer, the motor accommodating cavity penetrates the integrated housing along a first direction and communicates with the reducer accommodating cavity, a motor shaft of the motor is configured to drive the reducer, the first direction is parallel to an axial direction of the motor, and the motor and the reducer are arranged along the first direction.

13. The powertrain according to claim 12, wherein the integrated housing further comprises a controller accommodating cavity, a direct current input interface mounting hole, and an alternating current output interface mounting hole, the controller accommodating cavity is configured to accommodate the motor control unit, the controller accommodating cavity and the motor accommodating cavity are arranged along a second direction, the second direction is perpendicular to the first direction, a motor end cover comprises an alternating current output interface communication hole, a winding wiring hole, and a cooling hole, and the three input copper bars penetrate the winding wiring hole and are electrically connected to the motor winding, wherein
along the first direction, the direct current input interface mounting hole and the alternating current output interface mounting hole each penetrate the integrated housing and communicate with the controller accommodating cavity, the alternating current output interface communication hole, the winding wiring hole, and the cooling hole all penetrate the motor end cover, the direct current input interface mounting hole and the alternating current output interface mounting hole are arranged opposite to each other, a projection of the alternating current output interface communication hole covers a projection of the alternating current output interface mounting hole, a projection of the three-phase input copper bar partially overlaps the projection of the alternating current output communication hole, and projections of the three input copper bars partially overlap a projection of the cooling hole;
along a radial direction of the motor, the winding wiring hole is arranged between the alternating current output interface communication hole and the motor shaft, and the cooling hole is arranged between the alternating current output interface communication hole and the winding wiring hole; and
along the first direction, the cooling hole and a housing limiting slot of the motor are arranged adjacent to each other, and the cooling hole communicates with the housing limiting slot.

14. An electric vehicle, comprising a vehicle body, a wheel, and the motor according to any one of claims 1 to 10 or the powertrain according to any one of claims 11 to 13, wherein the motor or the powertrain is configured to drive the wheel, and the vehicle body is configured to fasten the motor or the powertrain.
